Europäisches Patentamt

European Patent Office

Office européen des brevets

(19)

(11) Veröffentlichungsnummer: **0 139 843 B1**

(12) **EUROPÄISCHE PATENTSCHRIFT**

(45) Veröffentlichungstag der Patentschrift: **18.09.91**

(51) Int. Cl.5: **C05D 5/00**

(21) Anmeldenummer: **84107374.5**

(22) Anmeldetag: **27.06.84**

(54) **Flüssige magnesiumhaltige Formulierungen.**

(30) Priorität: **01.07.83 DE 3323730**

(43) Veröffentlichungstag der Anmeldung:
**08.05.85 Patentblatt 85/19**

(45) Bekanntmachung des Hinweises auf die
Patenterteilung:
**18.09.91 Patentblatt 91/38**

(84) Benannte Vertragsstaaten:
**AT BE CH DE FR GB IT LI NL SE**

(56) Entgegenhaltungen:
**DE-B- 2 165 705**

(73) Patentinhaber: **HOECHST AKTIENGESELL-
SCHAFT
Postfach 80 03 20
W-6230 Frankfurt am Main 80(DE)**

(72) Erfinder: **Albrecht, Konrad, Dr.
Sodener Strasse 64
W-6233 Kelkheim (Ts.)(DE)**
Erfinder: **Frisch, Gerhard, Dr.
Westerwaldstrasse 7
W-6393 Wehrheim/Ts.(DE)**

## Beschreibung

Gegenstand der vorliegenden Anmeldung sind magnesiumhaltige Formulierungen mit Netz- und Dispergiermitteln.

Magnesiumverbindungen werden im Agrarbereich zur Bekämpfung von Magnesium-Mangelkrankheiten wie beispielsweise der Stiellähme im Weinbau eingesetzt. Bisher wurden Magnesiumverbindungen nur in Form von Pulverformulierungen angewendet. Pulverformulierungen haben jedoch den Nachteil, daß sie bei der Herstellung vor allem aber bei der Anwendung stark stäuben. Außerdem treten häufig Probleme beim Suspendieren der Pulverformulierung in der Spritzbrühe auf, daß die Pulverteilchen in der Spritzbrühe verklumpen können. Weiterhin kann es zu Unverträglichkeiten der Pulverformulierung mit zusätzlich eingesetzten Pestiziden kommen. Die nachfolgend beschriebenen wäßrigen Magnesium-Formulierungen weisen diese Nachteile nicht auf.

Desweiteren sind aus der DE-B-2 165 705 magnesiumhaltige benetzbare Pulver bekannt, die das Magnesium in Form von Magnesiumoxid enthalten und zusätzlich zur Benetzung ein Dispergier- und Benetzungsmittel aufweisen. Hieran ist der Einsatz von Magnesiumoxid nachteilig, da diese Verbindung äußerst reaktionsträge ist, so daß zur Erzielung der gewünschten Wirkung große Mengen eingesetzt werden müssen.

Gegenstand der vorliegenden Erfindung sind magnesiumhaltige, wäßrige 0.1 bis 15 Gew.% Formulierungen mit einem Anteil an Dispergiermitteln und einem Anteil von 2-27 Gew.-% Magnesium in Form von Magnesiumhydroxid.

Vorteilhafterweise enthalten die erfindungsgemäßen Formulierungen 0,1 bis 15 Gew.-%, vorzugsweise 2 bis 8 Gew.-% Dispergiermittel.

Weiterhin bevorzugt werden 15 bis 22 Gew.-% Magnesium in Form von Magnesiumhydroxid eingesetzt.

Die Gewichtsprozent-Angaben beziehen sich jeweils auf die gesamte Formulierung.

Als Dispergiermittel kommen insbesondere infrage Alkalisalze eines Sulfobernsteinsäurehalbesters hergestellt durch Umsetzen eines Polyglykolethers eines Kondensationsproduktes aus einem $(C_8-C_{12})$-Alkylphenol und Formaldehyd mit Maleinsäureanhydrid und einem Alkalisulfit gemäß DE-PS 21 32 405, wobei dieser vorzugsweise aus 3 Mol Nonylphenol, 18 Mol Ethylenoxid, 2 Mol Formaldehyd, 3 Mol Natriumsulfit und 3 Mol Maleinsäureanhydrid besteht, Alkaliligninsulfonate, Kondensationsprodukte aus Phenolen und/oder Naphtholen und/oder Kresolen mit Formaldehyd und Natriumbisulfit, beispielsweise ®Dispersogen A, ®Dispergiermittel SS (der Firma Hoechst AG), Natrium-oleyl-N-methyltaurid, Tridecylalkoholpolyglykolether mit 8 bis 20 AeO [*)], Tristyrylpolyglykolether, Kondensationsprodukte von Alkylphenolen mit Formaldehyd und Polyaminen, Calcium-phenylsulfonat oder Gemische aus ionischen und/oder nichtionischen Tensiden wie die ®Sandoperol-Typen der Firma Sandoz.

Die erfindungsgemäßen Magnesium-Formulierungen können zusätzlich Spurenelemente in Form ihrer Salze enthalten, wobei der Anteil des einzelnen Elements an der Gesamtformulierung zwischen $1,0 \times 10^{-6}$ und 1,0 Gew.-%, vorzugsweise zwischen 0,001 und 0,01 Gew.-% variieren kann. Es werden hierbei bevorzugt Salze der Elemente Eisen, Zink, Mangan, Molybdän, Kupfer, Bor und Kobalt eingesetzt. Diese können in komplexierter Form vorliegen (Verwendung bekannter Komplexbildner wie EDTA [1)]und ähnlicher Verbindungen).

Die erfindungsgemäßen Formulierungen enthalten zweckmäßigerweise noch 0,1 bis 4 Gew.-%, insbesondere 0,5 bis 2 Gew.-% Entschäumer, beispielsweise solche auf Silikonbasis, sowie 0,01 bis 10 Gew.-%, vorzugsweise 0,05 bis 1 Gew.-% Verdicker, wobei bevorzugt Alumosilikate mit Blattstruktur vom Typ der Bentonite wie beispielsweise ®Hectorit oder Montmorillionite oder Gemische aus gleichen Teilen eines Alkaliligninsulfonates und einem quellfähigen Erdalkalisilikat (®Darwan Nr. 3, Vanderbilt Corp., USA) eingesetzt werden.

Ferner werden den erfindungsgemäßen Magnesiumformulierungen gegebenenfalls Frostschutzmittel mit einem Anteil von 3 bis 10 Gew.-% hinzugefügt. Geeignete Mittel sind beispielsweise Ethylenglykol, Polypropylenglykol, Glyzerin und Harnstoff.

Die erfindungsgemäßen Magnesiumformulierungen werden zweckmäßigerweise hergestellt, indem man die Komponenten nacheinander in Wasser einrührt. Die so hergestellte Vormischung wird dann durch eine Kolloidmühle vorzerkleinert und anschließend mittels Reibkugelmühlen vermahlen.

Die erfindungsgemäßen Magnesiumsuspensionen sind völlig homogen und besitzen überraschender-

[*)] AeO = Ethylenoxideinheiten

[1)] EDTA = Ethylendiamintetraessigsäure

weise eine sehr hohe Lagerstabilität. So zeigen sie bei Lagerversuchen über 3 Monate hinweg bei +10° C, bei Raumtemperatur und bei 50° C keinerlei Beeinträchtigung in ihrer Konsistenz. Die Formulierungen besitzen ferner ein thixotropisches Verhalten, d.h. ihre Viskosität nimmt beim Stehen zu. Einfaches Schütteln führt sie in den ursprünglichen Zustand zurück. Sedimentbildungen oder Abscheidungen werden nicht beobachtet. Die erfindungsgemäßen Formulierungen lassen sich daher sehr gut handhaben.

Die erfindungsgemäßen Magnesiumformulierungen lassen sich mit handelsüblichen Pestiziden insbesondere Fungiziden wie beispielsweise Glycophen, Vinclozin, Captan-Mancozeb-Gemisch (®Colosan), Kupferkalk, Schwefel, Dicofol, Triademifon, Deltamethrin, Procymidone vermischen und zeigen gute Verträglichkeiten in Tankmixturen.

Die erfindungsgemäßen Magnesiumformulierungen besitzen ferner eine sehr gute Pflanzenverträglichkeit und lassen sich hervorragend zur Bekämpfung von Magnesiummangelkrankheiten von Kulturpflanzen, insbesondere Wein, und von Bäumen, insbesondere Nadelbäumen einsetzen. Es werden hierbei Mengen von 0,1 Liter bis 100 Liter Magnesiumformulierung pro Hektar, vorzugsweise 1 bis 20 Liter pro Hektar eingesetzt. Dies entspricht einer Dosierung von 30 g bis 30 kg Magnesium pro Hektar.

Vor der Anwendung wird die Magnesiumformulierung mit Wasser verdünnt, wobei die Spritzbrühe 0,01 bis 10 Gew.-% Magnesium, insbesondere 0,1 bis 1,0 Gew.-% Magnesium enthalten kann.

Die Erfindung wird durch die nachfolgenden Beispiele näher erläutert.

Beispiele 1-17

Die Formulierungen wurden durch aufeinanderfolgendes Verrühren der Komponenten und anschließende Vermahlung über Kolloid- und Reibkugelmühlen hergestellt.

Die Formulierungen gemäß Beispielen 1-17 der nachfolgenden Tabelle erwiesen sich bei Lagerversuchen über 3 Monate zwischen 10° C und 50° C als stabil. Es wurden keine Veränderungen wie Ausflockungen und dergleichen beobachtet.

EP 0 139 843 B1

Beispiele

Angaben in Gew.-% bezogen auf gesamte Formulierung

| Bsp. Nr. Komponenten | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| $Mg(OH)_2$ | 47,9 | 47,9 | 47,9 | 47,9 | 47,9 | 47,9 | 47,9 | 47,9 | 47,9 | 36,00 | 35,00 | 47,98 | 47,9 | 32,00 | 47,9 | 47,98 | 47,9 |
| $Mg\,O$ | | | | | | | | | | 5,0 | | | | 8,0 | | | |
| Spurensalze[1] | 1,2 | 1,2 | 1,2 | 1,2 | 1,2 | 1,2 | 1,2 | 1,2 | 1,2 | 1,2 | 1,2 | 3,6 | 1,2 | | 1,2 | | 1,2 |
| EDTA-Na[2] | 3,50 | 3,50 | 3,50 | 3,50 | 3,50 | 2,50 | 3,50 | 3,50 | 3,50 | 3,50 | 3,50 | 2,50 | 2,50 | | 2,50 | | 2,5 |
| Wasser | 35,00 | 35,00 | 35,00 | 35,00 | 35,00 | 37,40 | 35,00 | 35,00 | 35,00 | 40,3 | 44,3 | 34,92 | 37,40 | 39,00 | 36,40 | 38,02 | 35,0 |
| Ethylenglykol | 5,00 | | | 3,00 | 5,00 | 5,00 | 5,00 | | 5,00 | 5,00 | 8,00 | 5,00 | 5,00 | | 4,00 | 6,00 | 4,0 |
| Glycerin | | | | 2,0 | | | | | | | | | | | | | |
| Propylenglykol | | 5,0 | | | | | | 5,0 | | | | | | | | | |
| Harnstoff | | | 5,0 | | | | | | | | | | | 5,0 | | | |
| Alkalilignin-sulfonat | | 3,0 | | | | | 6,40 | | | 2,0 | | | | 9,0 | | | 3,3 |
| Dispersogen A | 3,40 | 3,40 | 3,40 | | 3,40 | 3,00 | | 6,40 | | 4,00 | 4,00 | 5,00 | 3,00 | | 7,00 | | 5,0 |
| Phenylsulfonat-calcium | | | | | | | | | | | | | | 2,00 | | 1 | |
| Sulfonbernstein-halbester[3] | 3,00 | | 3,00 | | | 2,00 | | | | 3,00 | | | 2,00 | | | 4,00 | |
| Siliconent-schäumer[5] | 1 | 1 | 1 | 1 | 1 | 1 | 1 | 1 | 1 | 1 | 1 | 1 | 1 | 1 | 1 | 1 | 1 |
| Dispergier-mittel SS | | | | 6,40 | 3,00 | | | | 3,40 | | 2,00 | | | 4,00 | | 2,00 | |
| Sandoperol | | | | | | | | | 3,00 | | | | | | | | |
| Bentone EW[4] | | | | | | | | | | | | | | | | | 0,1 |

1) Die Spurensalze besitzen folgende Zusammensetzung bezogen auf die Gesamtkonzentration von 1,2 Gew.-%:

$0,002$ % $CoSO_4 \cdot 7H_2O$

$0,172$ % $H_3BO_3$

$0,393$ % $CuSO_4 \cdot 5H_2O$

$0,049$ % $FeSO_4 \cdot 7H_2O$

$0,123$ % $MnSO_4 \cdot 1H_2O$

$0,022$ % $Na_2MoO_4 \cdot 2H_2O$

$0,439$ % $ZnSO_4 \cdot 7H_2O$

2) EDTA-Na = Ethylendiamin-tetraessigsäure-Natrium-Salz

3) hergestellt aus 3 Mol Nonylphenol, 18 Mol Ethylenoxid, 2 Mol Formaldehyd, 3 Mol Natriumsulfit und 3 Mol Maleinsäureanhydrid.

4) ®Bentone EW – Alumosilikat der Firma Kronos Titan GmbH, Leverkusen

5) Typ SE 2    Wacker-Chemie, München

Biologische Beispiele

Tomaten-, Gurken- und Buschbohnenpflanzen wurden unter Gewdchshausbedingungen (Temp. zwischen 180 und 220C, 80-90 % Luftfeuchte) mit den erfindungsgemd_en Magnesiumsuspensionen der Beispiele 1 - 17 bespr|ht. Nachfolgende Tabelle zeigt, da_ bei den dort angegebenen Magnesium-Konzentrationen keine pflanzenschddigenden Effekte zu beobachten sind.

Die Schddigung wurde nach einem Zahlenschl|ssel von 1 bis 9 ermittelt, wobei 1 keinerlei Schddigung und 9 Totalschddigung bedeutet.

|  |  | Schädigung der Pflanze | | |
|---|---|---|---|---|
| Testpflanze: |  | Buschbohne | Tomate | Gurke |
| Kontrolle: |  | 1 | 1 | 1 |
| Mg-Suspension: | 0,25 % Mg | 1 | 1 | 1 |
| (wäßr. Spritz- | 0,5 % " | 1 | 1 | 1-2 |
| brühe) | 1,0 % " | 1 | 1 | 2 |

5

**Patentansprüche**

1.  Magnesiumhaltige, wäßrige an 0.1 bis 15 Gew.% Formulierung mit einem Anteil Dispergiermitteln und einem Anteil von 2-27 Gew.-% Magnesium in Form von Magnesiumhydroxid.

2.  Magnesiumhaltige Formulierung nach Anspruch 1, gekennzeichnet durch einen Gehalt von 15-22 Gew.-% Magnesium.

3.  Magnesiumhaltige Formulierung gemäß einem der Ansprüche 1 bis 3, dadurch gekennzeichnet, daß als Dispergiermittel Alkalisalze eines Sulfobernsteinsäurehalbesters eines Kondensationsproduktes aus einem $(C_8-C_{12})$-Alkylphenol und Formaldehyd mit Maleinsäureanhydrid und einem Alkalisulfit, Alkaliligninsulfonate, Kondensationsprodukte aus Phenolen und/oder Naphtolen und/oder Kresolen mit Formaldehyd und Natriumbisulfit, Natrium-oleyl-N-methyltaurid, Tridecaalkoholpolyglykolether mit 8 bis 20 AeO, Tristyrylpolyglykolether, Kondensationsprodukte von Alkylphenolen mit Formaldehyd und Polyamine, Calcium-Phenylsulfonat oder Gemische aus ionischen und/oder nicht-ionogenen Tensiden eingesetzt werden.

4.  Magnesiumhaltige Formulierung gemäß einem der Ansprüche 1 bis 4, dadurch gekennzeichnet, daß sie zusätzlich 0,1 bis 4 Gew.-% Entschäumer, 3 bis 10 Gew.-% Frostschutzmittel und 0,01 bis 10 Gew.-% Verdicker enthalten.

5.  Magnesiumhaltige Formulierung gemäß einem der Ansprüche 1 bis 5, dadurch gekennzeichnet, daß sie zusätzlich Spurenelemente in Form ihrer Salze enthalten, wobei der Anteil des einzelnen Elements an der Gesamtformulierung zwischen $1,0 \cdot 10^{-6}$ und 1,0 Gew.-% variieren kann.

6.  Magnesiumhaltige Formulierung gemäß Anspruch 5, dadurch gekennzeichnet, daß als Spurenelemente die Elemente Eisen, Zink, Mangan, Molybdän, Kupfer, Bor oder Kobalt eingesetzt werden.

7.  Verwendung der magnesiumhaltigen Formulierung gemäß einem der Ansprüche 1 bis 6 zur Bekämpfung von Magnesium-Mangelkrankheiten bei Kulturpflanzen und Bäumen.

8.  Verfahren zur Bekämpfung von Magnesium-Mangelkrankheiten bei Kulturpflanzen und Bäumen, dadurch gekennzeichnet, daß man diese mit einer magnesiumhaltigen Formulierung gemäß Ansprüchen 1 - 6 behandelt.

**Claims**

1.  A magnesium-containing, aqueous formulation comprising 0.1 to 15% by weight of dispersants and comprising 2-27% by weight of magnesium in the form of magnesium hydroxide.

2.  The magnesium-containing formulation as claimed in claim 1, which contains 15-22% by weight of magnesium.

3.  The magnesium-containing formulation as claimed in one of claims 1 to 3, in which alkali metal salts of a sulfosuccinic acid monoester of a condensation product of a $(C_8-C_{12})$-alkylphenol and formaldehyde with maleic anhydride and an alkali metal sulfite, alkali metal ligninsulfonates, condensation products of phenols and/or naphthols and/or cresols with formaldehyde and sodium bisulfite, sodium oleyl-N-methyltauride, tridecaalcohol polyglycol ethers having 8 to 20 EO, tristyryl polyglycol ether, condensation products of alkylphenols with formaldehyde, and polyamines, calcium phenylsulfonate or mixtures of ionic and/or non-ionic surfactants are employed as dispersants.

4.  The magnesium-containing formulation as claimed in one of claims 1 to 4, which additionally contains 0.1 to 4% by weight of defoamer, 3 to 10% by weight of antifreeze agent and 0.01 to 10% by weight of thickener.

5.  The magnesium-containing formulation as claimed in one of claims 1 to 5, which additionally contains trace elements in the form of their salts, it being possible for the content of the individual element in the entire formulation to vary between $1.0 \times 10^{-6}$ and 1.0% by weight.

6. The magnesium-containing formulation as claimed in claim 5, in which the elements iron, zinc, manganese, molybdenum, copper, boron or cobalt are employed as trace elements.

7. The use of the magnesium-containing formulation as claimed in one of claims 1 to 6 for controlling magnesium deficiency diseases in crop plants and trees.

8. A method of controlling magnesium deficiency diseases in crop plants and trees, which comprises treating these crop plants and trees with a magnesium-containing formulation as claimed in claims 1-6.

**Revendications**

1. Composition aqueuse contenant du magnésium qui renferme de 0,1 à 15% en poids de dispersants et de 2 à 27% en poids de magnésium sous la forme d'hydroxyde de magnésium.

2. Composition contenant du magnésium selon la revendication 1 caractérisée en ce qu'elle renferme de 15 à 22% en poids de magnésium.

3. Composition contenant du magnésium selon l'une des revendications 1 et 2, caractérisée en ce qu'on utilise, comme dispersants, des sels de métaux alcalins, d'un hémi-ester sulfosuccinique d'un produit de condensation, d'un $(C_8$-$C_{12}$-alkyl)-phénol et du formaldéhyde avec l'anhydride maléique et un sulfite de métal alcalin, des lignine-sulfonates de métaux alcalins, des produits de condensation de phénols et/ou de naphtols et/ou de crésols avec le formaldéhyde et l'hydrogénolsulfite de sodium, l'oléyl-N-méthyl-tauride de sodium, des produits de poly-éthoxylation du tridecanol contenant de 8 à 20 motifs EO, des éthers tristyrylpolyglycoliques, des produits de condensation d'alkylphénols avec le formaldéhyde et des polydamines, le benzène-sulfonate de calcium ou des mélanges de surfactifs ioniques/ou non ioniques.

4. Composition contenant du magnésium selon l'une quelconque des revendications de 1 à 3, caractérisée en ce qu'elle contient en outre de 0,1 à 4 % en poids d'un antimousse, de 3 à 10% en poids d'un anti-gel et de 0,01 à 10% en poids d'un épaississant.

5. Composition contenant du magnésium selon l'une quelconque des revendications 1 à 4, caractérisée en ce qu'elle contient en outre des oligo-éléments sous la forme de leurs sels, la proportion des divers éléments par rapport à la composition totale pouvant varier entre $1,0.10^{-6}$ et 1,0% en poids.

6. Composition contenant du magnésium selon la revendication 5, caractérisée en ce qu'elle contient, comme oligo-éléments, des éléments pris dans l'ensemble constitués par le fer, le zinc, le manganèse, le molybdène, le cuivre, le bore et le cobalt.

7. Application de la composition contenant du magnésium selon l'une quelconque des revendications 1 à 6 à la lutte contre des maladies causées par des carences en magnésium chez des plantes cultivées et des arbres.

8. Procédé pour combattre des maladies dues à des carences en magnésium chez des plantes cultivées et des arbres, procédé caractérisé en ce qu'on traite ceux-ci par une composition contenant du magnésium selon l'une quelconque des revendications 1 à 6.